# EUROPEAN PATENT SPECIFICATION

(11) **EP 0 546 773 B1**
(45) Date of publication and mention of the grant of the patent: **11.12.1996**
(21) Application number: 92311082.9
(22) Date of filing: 04.12.1992
(51) Int. Cl.: G06F 3/023, G06F 3/033

(54) **Graphical user interface for editing a palette of colours**
Graphische Benutzerschnittstelle zur Aufbereitung einer Farbtafel
Interface utilisateur graphique pour l'édition du tableau de couleurs

(30) Priority: 11.12.1991 US 805224; 11.12.1991 US 805691
(43) Date of publication of application: 16.06.1993
(73) Proprietor: XEROX CORPORATION, Rochester New York 14644 (US)
(72) Inventor: Beretta, Giordano Bruno, Palo Alto, California 94303 (US)
(74) Representative: Reynolds, Julian David

(56) References cited:
- EP-A- 0 403 081
- EP-A- 0 448 250
- 'System 7 Macintosh Refence Manual' 1991 , APPLE COMPUTER, INC. , CUPERTINO, CA, US pages 253-257

## Description

A color selection and editing user interface provides the control and communications link between the user of a color specification system and an underlying color model. The interface provides a color space in which the user selects and edits colors. A color space is a pictorial or graphical representation or construction of a color model, visually showing a schematic representations of colors.

Some color specification systems use a device dependent color classification model which is not generally correlated to a human color perceptual model. Device dependent color models provide color spaces that treat color differences and changes in color characteristics which control physical color output devices but which are not related to how humans visually perceive or describe color. The degree of uniformity of the underlying color model directly impacts the user's effectiveness with a color selection and editing user interface. Considerable trial and error may be required to select a specific color or to achieve a desired color modification in these color spaces because the color model and its color space representation is not uniform to the user, and a large change in one or more of the physical descriptors of the color space, such as in the R, G, or B dimensions, will not necessarily result in a correspondingly large change in the perceived color. Thus, user interfaces based on conventional nonuniform color models generally limit user editing functions to selecting colors from fixed palettes of colors or to providing a mechanism by which the user may create and modify colors by specifying percentages of certain primary colors, either via text input, or by manipulating graphical tools such as sliding color bars, or color wheels.

A uniform color space, based on an underlying uniform color model, represents colors for the user in a way that corresponds to human perceptual color attributes and provides for more user control, accuracy, and precision in color selection and editing. One such device independent color specification system is that developed by the international color standards group, the Commission Internationale de l'Eclairage (the "CIE"). CIE color specification employs device independent "tristimulus values" to specify colors and to establish device independent color models by assigning to each color a set of three numeric tristimulus values representing a color according to its spectral power distribution. The CIE has recommended the use of an approximately uniform color space called the CIE 1976 (L*a*b*) color space (hereafter referred to as "CIELAB" space or " LAB" space).

A color display system which utilizes a uniform color model for use in selecting and controlling colors in graphics images generated by a computer system is disclosed in Taylor et. al., in EP 0 313 796 A3, entitled, "Computer display color control and selection system". Robertson, P. K., in "Visualizing Color Gamuts: A User Interface for the Effective Use of Perceptual Color Spaces in Data Displays", *IEEE Computer Graphics & Applications,* September, 1988, pp. 50-64, discloses the use of uniform color spaces in computer graphics and image processing applications. An interactive palette selection system is disclosed in Hedin, C. and Derefeldt, G., "Palette - A Color Selection Aid for VDU Images", *Perceiving, Measuring, and Using Color: Proceedings of SPIE,* Vol. 1250, Santa Clara, CA., Feb. 15-16, 1990, pp. 165-176.

Controlling the color appearance of colors when they are translated from one color reproduction device to another is also an important feature for a color interface. Device independent color specification facilitates color reproduction among diverse color devices. A device "gamut" includes all of the colors physically producible from the primary colors on a particular device, and may be defined in a device independent form. Different color reproduction devices have different gamuts, and thus, there is no one-to-one color correspondence between device gamuts. The device independent color specification for a color on one device may then be mapped to the same device independent color specification for the corresponding color within the gamut of another device. In devices having automated color correction processes, this mapping generally assumes that the goal of color correction is to produce what is called a "metameric" match between colors. There are, however, many variables influencing color appearance not taken into account by automated color correction and metameric matching. Automatic correction algorithms, which are beyond the control of the color user, may affect the information content or visual effect being conveyed in the color image. Users who want to incorporate color effectively in printed materials need the ability to directly and predictably control color appearance across different color devices, by being able to precisely and easily modify colors on one device for predictable reproduction on another device.

The prior art color selection or editing systems are narrowly tailored for specific color selection purposes, such as scientific mapping or adjusting colors for photographic film reproduction, do not provide for complete manual control over color mapping between display and print device gamuts, and do not provide the user with both direct image pixel manipulation and color palette manipulation. In addition, many of the previously described color selection tools do not display an entire palette of colors at one time so that a user may immediately perceive and preserve color relationships among all colors when one color is changed.

It is an object of the present invention to provide a graphical user interface for color selection and color modification which provides visually intuitive and directly manipulable ways of organizing, managing, and predicting color in the context of a uniform color model. The graphical user interface of the present invention displays an entire palette of colors in a two dimensional view of a uniform color space while permitting the user to edit individual palette colors by directly manipulating the colors in the color space. Thus, the graphical user interface makes explicit to users the relationship among colors in the palette of colors as they are being edited. It is also an object of the present invention to provide a facility for the user to manually control how a color will be reproduced in a given device gamut, on one or more output devices.

There is provided in accordance with the present invention a graphical user interface according to claim 1 of the appended claims.Preferably, the color space is a uniform color space in which spatial distances between the displayed colors correspond directly with human perceptual color differences so that movement of the color in the coordinate system of the color space is directly related to uniform perceptual changes in the color. The modifying means also include independent lightness modifying means for modifying the lightness signal of a color in response to signals from the input signal receiving means.

There is also provided a plurality of colorimetrically measured colors representing the gamut of colors reproducible by the display means. The color information signals representing the colors of the display gamut are stored in a device independent color specification. When the user modifies a color in the color space, adjusting means ensure that the set of modified color information signals represent a color that is reproducible in the display gamut.

There is also provided a system for manually controlling and modifying the appearance of a palette of colors, according to claim 3 of the appended claims.Preferably, the color space is a uniform color space, such as the CIELAB color space. The color space drawing means may also draw a polygonal gamut boundary for a selected print device gamut in the color space. The coordinates in the color space of the vertices of the gamut boundary may be defined by respective ones of the colorimetrically measured colors representing the gamut. The modifying means may include means for moving a color currently located outside a selected print device gamut to a destination location within a selected print device gamut, and for moving a color currently located within the selected print device gamut to another location within the device gamut. The modifying means may also include lightness modifying means for modifying the lightness signal of each color in response to input signals received from the input signal receiving means.

The color modifying processing means may also include adjusting means, responsive to the modifying means, for clipping the modified color information signals to correspond to a reproducible color in the device gamut. The adjusting means may also include means for constraining a modified color moved from a current location inside a device gamut to a destination location outside the device gamut to be a reproducible color in the device gamut of the selected device. Preferably, the reproducible color in the device gamut is a color with an appearance close to the appearance of the modified color selected by the user.

The present invention further provides a method for modifying the appearance of a plurality of colours in a colour display system, according to claim 11 of the appended claims.

The present invention further provides a method for interactively controlling and modifying the colour reproduction of a plurality of colours, according to claim 13 of the appended claims.

Embodiments of the present invention will now be described, by way of example, with refernce to the accompanying drawings, in which:
Figure 1 is a functional block diagram illustrating a computer controlled system suitable for implementing the present invention;
Figure 2 is a mouse pointing device suitable for inputting user signals to the color editing graphical user interface of the present invention;
Figure 3 is a simplified functional block diagram illustrating the graphical user interface (GUI) components of the present invention;
Figure 4 is a pictorial representation of a display screen showing the color space window displayed;
Figure 5 is a pictorial representation of a color space window with a selected monitor gamut and palette of colors displayed therein;
Figure 6 is a pictorial representation of a color space window with a selected printer gamut displayed therein;
Figure 7 is a flow chart illustrating the overall process flow for receiving and analyzing user input requests and executing color editing functions for the present invention;
Figure 8 is a flow chart illustrating the Paint Window procedure shown in Figure 7;
Figure 9 is a pictorial representation of a color space window with the histogram color space displayed; and
Figure 10 illustrates the overall processing flow for modifying a color according to the present invention.

During the following description of the features of the present invention, like references have been used throughout to designate identical elements.

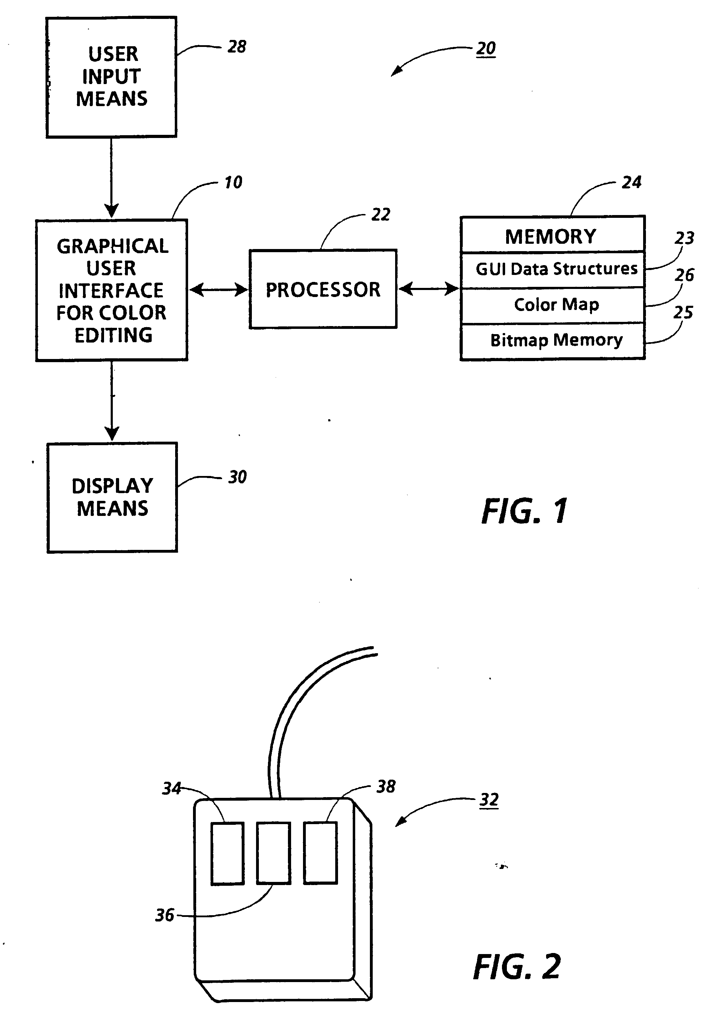

Figure 1 is a simplified functional block diagram illustrating the components of a computer controlled color display system 20 (hereinafter, "system 20") of the type suitable for implementing the color editing graphical user interface of the present invention. System 20 may be a standalone system, such as a microcomputer=based desktop publishing system. It is also intended, however, that system 20 may be a subsystem of, or included within, a broad range of color display or reproduction systems providing for operator control of color editing and adjustment, including but not limited to such devices as color copiers, various types of digital color printers, platemaking systems for color offset printing, and color video, film or transparency processing devices.

The components of system 20 include a processor 22, display means 30, and at least one memory device 24. Memory device 24 provides storage for program instructions in program memory (not shown) and for data in data memory (not shown) needed for the implementation of the color editing graphical user interface 10 software of the present invention. Memory device 24 includes a bitmap, or functionally equivalent, memory 25 for storing the color information signals representing the color to be displayed in each pixel location on display means 30. Memory device 24 may include a color map data structure 26, also used for associating color information signals with the corresponding individual pixel locations on display means 30. The operation of bitmap memory 25 and color map data structure 26 is described in more detail below. The color editing graphical user interface 10 software (hereafter, "GUI 10") of the present invention functions as a direct manipulation user interface for controlling system 20. A user of GUI 10 selects a color editing function from available functions (described in more detail below) displayed on display 30 and provides requests for a function via user input means 28. GUI 10 is responsive to user input means 28 and accomplishes the editing task requested, displaying results of user requests through display means 30.

Processor 22 is in communication with GUI 10, executing program instructions of GUI 10 for interpreting, coordinating, and responding to the user's color editing requests. Processor 22 may be any appropriate processor, such as a microprocessor. Processor 22 executes instructions retrieved from memory 24 in a conventional manner and retrieves and stores data in memory 24. Processor 22 also controls the communication of color information signals representing color palette information from color map data structure 26, and additionally may also control the receipt of other input data from input sources not shown. In addition, processor 22 may execute other programs to perform functions other than color editing provided by GUI 10.

User input means 28 may include any suitable device for interacting with GUI 10, including but not limited to pointing and cursor control devices for two- and three-dimensional displays, such as a mouse, alphanumeric input devices such as a keyboard, and touch screen displays. The three-button mouse 32 illustrated in FIG. 2 provides the primary method for a user to send signals to GUI 10 requesting color editing functions. Mouse 32 is connected in a conventional manner to system 20.

Display 30 may be any suitable color display for displaying computer generated data, such as a cathode ray tube (CRT) raster scan color monitor or a color liquid crystal display (LCD). While it is preferable that display 30 be a color display device, GUI 10 may be implemented using a monochrome display device. The color information signals representing color palette data edited by the user the present invention subsequently may (but need not) be output to a color output device (not shown) of system 20, such as an electronic or digital printer, xerographic marking engine, platemaking device, or other suitable color rendering device.

Refresh memory area 25 in memory 24 stores color information signals for each addressable pixel on display device 30. Some systems may use a color map data structure 26 to minimize the storage requirements needed for the color information signals in memory 24. The operation of color map 26 is well known in the art.

Color editing graphical user interface 10 of the present invention is a body of software that exchanges data with display 30 and user input means 28, and also with processor 22 in order to accomplish the color editing functions it provides to the user. This software provides a region on display means 30 called a "window" for presenting color editing functions to the user, converts signals received from input means 28 into a series of user input signals for directing control of processor 22, and receives data from processor 22 for updating the representations in the window presented on display 30.

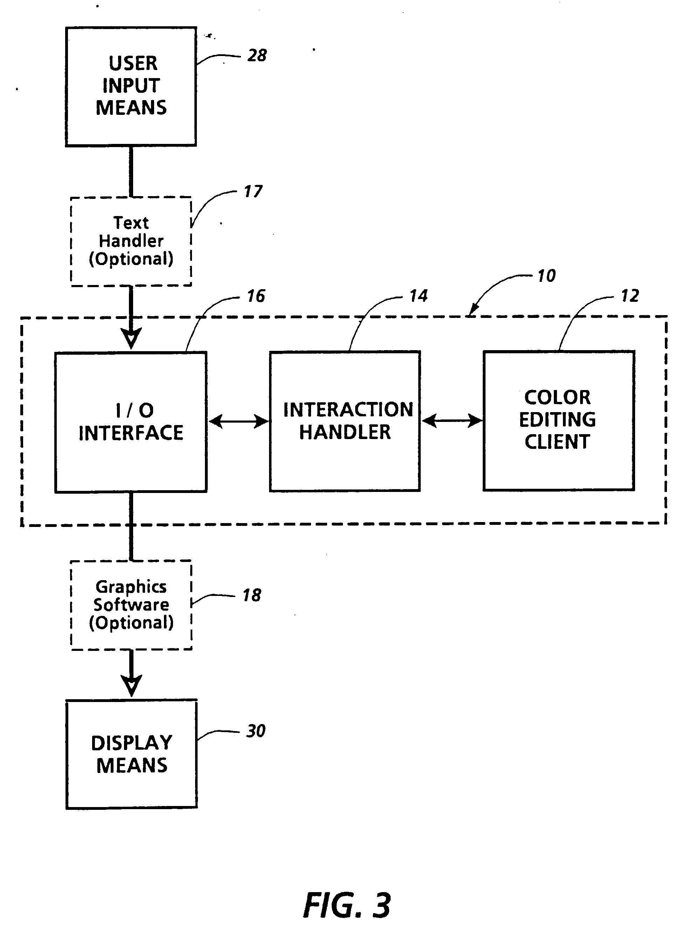

Figure 3 illustrates a simplified block diagram of the functional components of the color editing graphical user interface 10 of the present invention. Color editing client software 12 contains the software instructions for defining and implementing the color editing functions available to the user, for defining the color spaces and gamuts in which color editing takes place, and for directing processor 22 to perform transformations on color information signals and color spaces as needed. Color editing client software 12 also interfaces, via processor 22, with data structures 23, 25, and 26 (FIG. 1) stored in memory 24. Interaction handler 14 exchanges signals with the user through I/O interface 16 which provides signals to display 30 for viewing by the user and receives input signals from input means 28. I/O interface 16 communicates with conventional graphics software 18 for formatting the signals necessary to draw the various contents of the window. Interaction handler 14, in turn, sends signals received from the user to color editing client program 12 for interpretation of the color editing function requested. Color editing client program 12 then sends appropriate signals to processor 22 for executing the requested function. I/O interface 16 includes text handler software 17 which collects, interprets, and parses the input data stream of user input requests and data into appropriate input signals before passing the signals to interaction handler 14. Interaction handler 14 and I/O interface 16 may be implemented as part of a larger software environment known as a user interface management system (UIMS) which performs a variety of window management and coordination functions. It is intended that color editing GUI 10 have broad applicability to many systems environments where computer controlled color display or reproduction is a functional component.

Color editing GUI 10 uses a CIE device independent color model based on colorimetric principles for internal color representation and manipulation. CIE color specification employs such a set of device independent X, Y, and Z tristimulus values to specify a color according to the color's appearance under a standard source of illumination as viewed by a standard observer. Color editing GUI 10 provides three CIE spaces in which colors may be edited. The 1931 CIE Chromaticity Diagram color space (hereafter referred to as the "chromaticity diagram") represents colors according to their "chromaticity" coordinates. The horseshoe-shaped "spectrum locus"of the chromaticity diagram is a set of points representing the *x, y* chromaticities of the spectrum (monochromatic) colors, plotted according to their wavelengths, ranging from 380 to 700 nanometers. The *x* and *y* chromaticity coordinates for any naturally occurring color are located within the boundary of the spectrum locus outline and the line that joins the ends of the spectrum locus, referred to as the. "purple line". The mapping of natural colors to the chromaticity diagram provides a useful context in which to display a palette of colors and to edit individual colors to modify their appearance.

Another CIE color space provided for editing is the 1976 Uniform Chromaticity Scale Diagram, also known as the CIE 1976 UCS diagram, the "*u'*, *v'*(u-prime, v-prime)" diagram, and the CIE metric diagram (hereafter referred to as the "UCS diagram"). The UCS diagram is a mathematical transform of the 1931 CIE space which better represents the discrimination of color attributes hue and saturation in such a manner as to represent equally spaced color differences as points separated by nearly equal distances.

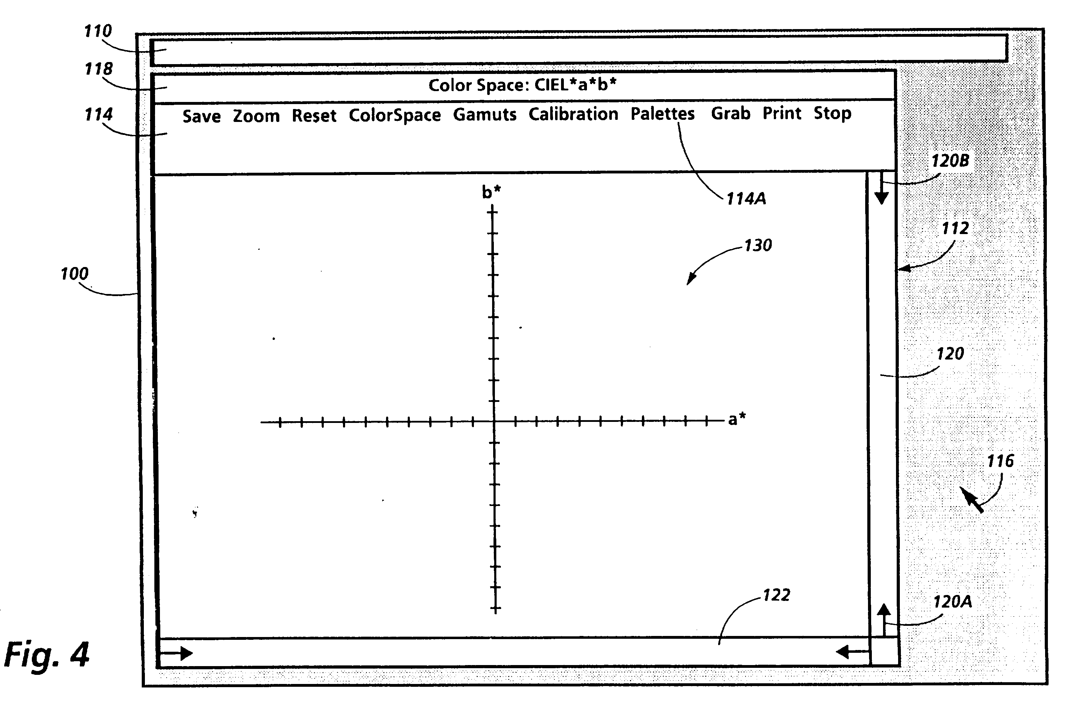

Modifying colors using the implemented embodiment of color editing GUI 10 may also be performed in the CIE 1976 (L*a*b*) color space 130 (FIG.4), where a numerically computed color difference bears a closer relationship to a color difference actually perceived by a human observer. Also, color editing GUI 10 manipulates colors internally in a uniform color space such as the CIELAB color space. Two coordinate axes, represented by a* (a-star) and b* (b-star) respectively, describe the chromatic attributes of color. The a* axis represents the red-green coordinate, where positive values of a* denote red colors, while negative values denote green colors. The b* axis represents the yellow-blue coordinate, where positive values represent yellows and negative values signify blues. The L* (L star) coordinate defines a perceptual correlate of a color's "psychometric lightness". Lightness may be referred to as "relative brightness", is in the range of 0 to 100, and lies perpendicular to the a*, b* plane. Mathematical manipulations of colors in CIELAB space may be accomplished in both rectangular and cylindrical coordinates. Cylindrical coordinates permit identification and manipulation of the perceptual correlates of "hue" and "chroma ". A hue correlate in cylindrical CIELAB space is the angle which correlates to a hue numerically by an angle ranging from 0.0 to 360.0 degrees, with values evenly distributed around the L* axis from the positive a* axis. Chroma is an object's colorfulness judged in proportion to a similarly illuminated achromatic area. The chroma of a color has a correlate in cylindrical CIELAB space radiating out perpendicularly from central L* axis and is the distance away from the achromatic, or gray, central L* axis 138 for a given lightness (L* level) and hue-angle, and a different range of chroma is available for various hue-angles as well as for various lightness (L*) levels.

Figure 4 illustrates display screen 100 which appears on display device 30 of computer controlled color rendering system 20 (FIG. 1). Message header area 110 at the top of screen 100 is used for displaying system and application-specific messages to the user. When selected for execution by the user, GUI 10 first presents color space display window 112. The user interacts with window 112 using conventional window manipulation and window content interaction techniques. To make a selection in window 112, the user uses mouse 32 to position cursor 116 on a selectable item in window 112 and depresses and releases ("clicks") one of the buttons 34, 36, or 38 (FIG. 2), on mouse 32 to select the item, or to cause the corresponding operation to be performed. Vertical scrollbar 120 of color space window 112 will permit scrolling of the color space currently displayed up or down within the window. Vertical scrollbar portions 120A and 120B represent up and down scrolling, respectively, when invoked by mouse 32. Clicking mouse 32 over either end of horizontal scrollbar 122 will cause horizontal left or right scrolling of the color space window. In addition, the user may move the entire window 112 to another location on display screen 100, and may enlarge or reduce the size of window 112 using conventional window manipulation techniques. Caption area 118, in the top portion of window 112 contains explanatory information about the contents displayed in window 112. Just below caption area 118 is menu area 114 which displays the functions and features available for selection by the user of color editing GUI 10.

Initiating execution of color editing GUI 10 results in the software displaying, in color space display window 112, a graphical, two-dimensional representation of the CIELAB color space 130. The user may select for display any of three different color spaces in which to perform color editing, or may display a histogram showing the frequency distribution of the lightness values of the currently selected palette. An example of the L* Histogram color space may be seen in FIG. 19. Table 1 below associates the four color space display options with the buttons on mouse 32 and with the "SHIFT" key on an input keyboard device (not shown). The user presses one of the valid mouse button - key combinations, listed in Table 1, to request display of the desired color space. All menu selections may be made in a similar manner using a pointing device such as mouse 32.

**TABLE 1:**

| Selecting A Color Space For Display | | |
|---|---|---|
| Mouse Button (FIG. 4C) | Keyboard "SHIFT" | Color Space Request |
| 34 | NO | CIELAB |
| 34 | YES | HISTOGRAM (L*) |
| 36 | NO | 1976 CIE UCS DIAGRAM |
| 38 | NO | CHROMATICITY DIAGRAM |

The user may request, at any time, the display of any of the available color spaces listed in Table 1. When the user changes the color space, each of the colors, currently plotted according to coordinates in one color space, is converted to the color value representation in the newly requested color space and plotted in the correct location in the new color space. Color editing GUI 10 also supports multiple color space display windows on a single display screen 100 using conventional window management techniques.

The user selects menu item "Palettes",114A, with mouse 32 to display a palette of colors. Selection of menu item 114A acts as a toggle switch which, when activated, presents a second menu line containing a list of color palette names available for display and editing in color space 130. When the user selects a list item from the second menu line, the input data file of colors identified by that name will be displayed in color space 130.

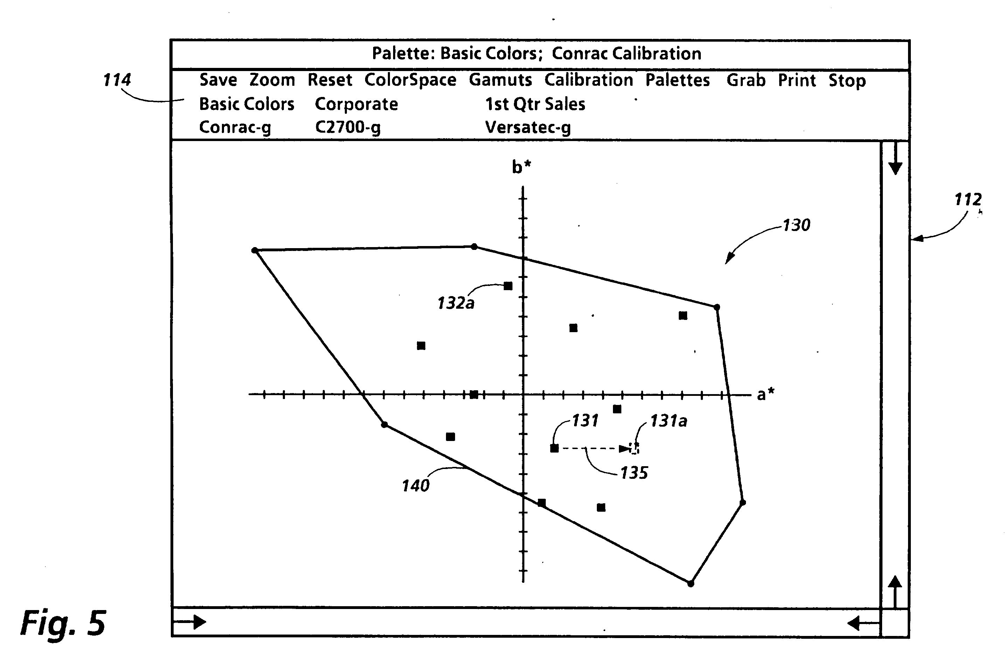

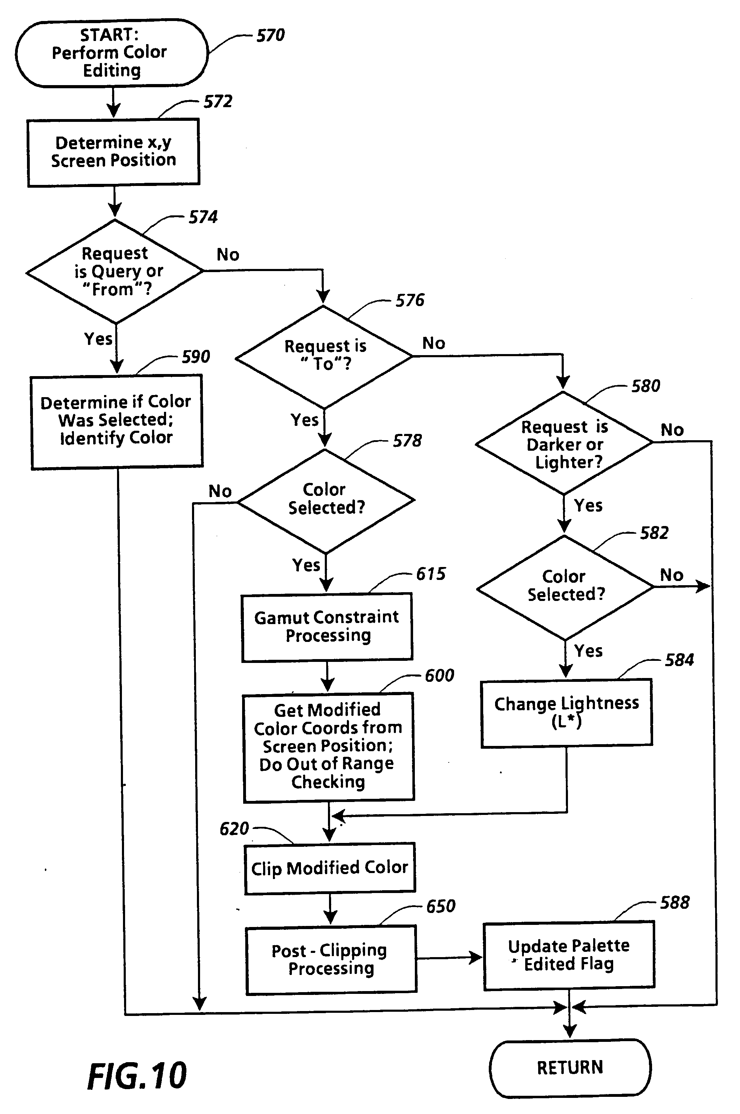

FIG. 5 illustrates the display in color space 130 of a palette of colors to be edited. The individual colors of the palette are converted from their internal storage format to values in the currently displayed color space and plotted in the rectangular color space coordinate system 130 according to their respective coordinates in the displayed color space. Each color is represented as a square mark in the actual color represented, and thus the L* signal of each color is indirectly represented in color space 130. The user may select some color functions using only mouse pointing device 32. Available color function options associated with mouse requests are summarized in Table 2 and described more fully below beginning with the discussion accompanying FIG. 10A. To edit one of the colors displayed, for example, color square 131, the user selects color square 131 with the cursor and middle mouse button 36 (FIG. 2). While keeping button 36 depressed, the user moves, or drags, color square 131 from its current location in color space 130 to a destination location 131a which will represent the desired modified color in color space 130. The movement of color square 131 is shown along dotted line 135. When the user releases middle mouse button 36 at the desired destination location, the new, modified color in color space 130 is determined from its location, and color square 131a is presented in the modified color. The scrolling functions described above as well as the "zoom" function available in menu area 114 provide the user with the ability to position a portion of color space window 112 for close inspection of the edited colors.

GUI 10 performs processing to ensure that the modified, or moved, color is an actual reproducible color in the gamut of display device 30. This requires colorimetrically measuring the gamut of display device 30, and storing this measured gamut in memory 24. In order to ensure that the modified color is reproducible in the display device gamut, color editing GUI 10 converts the coordinates representing the modified color value to hue, chroma and lightness values, maintains the hue and lightness of the destination color constant and adjusts the destination color's chroma by automatically clipping the chroma to ensure that the color is reproducible in the gamut. During color editing, a user will be prevented from moving colors outside of a displayed gamut boundary.

In order for the user to see where the boundaries of the display gamut are, the user may display the gamut boundary in color space 130 at any time by selecting the menu item labelled "Gamuts", which provides a third menu line containing the gamut boundaries available for display. The third menu line includes both monitor and printer devices. When the user selects a device name, in this case, the monitor's name, the monitor gamut boundary 140 is displayed in color space 130. The selected gamut menu item acts as a toggle switch and therefore, the user may remove the displayed monitor gamut boundary 140 from color space 130 by selecting the gamut menu item again with mouse 32. When a gamut boundary is displayed, a color is constrained within the physical limits of the boundary of monitor gamut 140 and may not be moved beyond those boundaries. Monitor gamut boundary checking is performed regardless of whether the monitor gamut is actually displayed in color space 130. If the user attempts to move a color outside of the monitor or selected printer gamut, the destination location of the color is moved back, or "clipped", to the point on the gamut where a line from the original location and the destination location intersects the gamut boundary line. In addition, other gamut processing ensures that the modified color is at the maximum lightness for the selected chroma and hue.

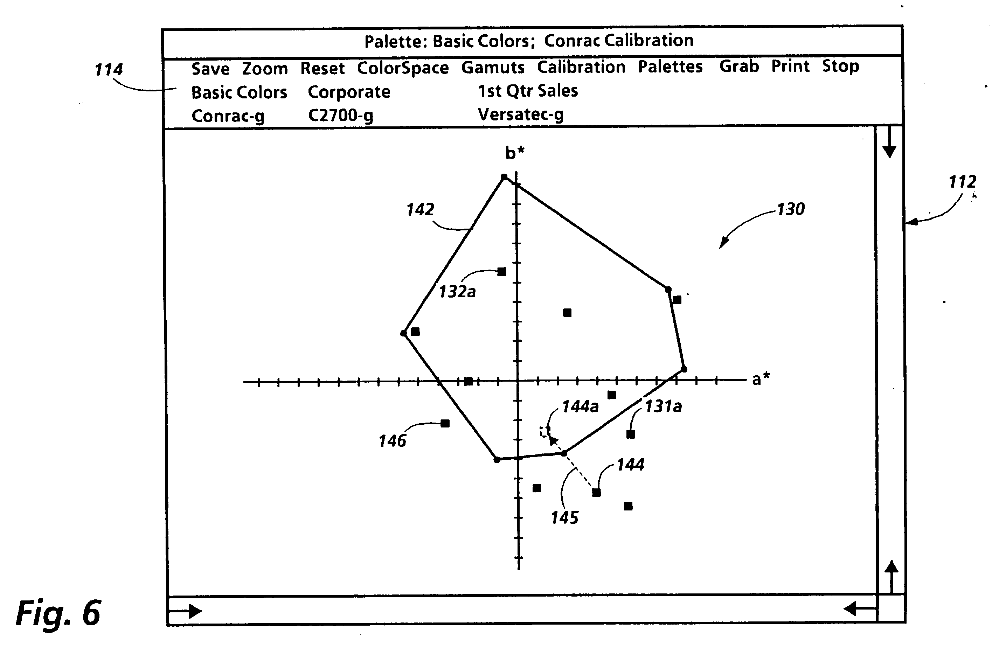

Requesting display of a printer device gamut will cause the monitor gamut to be removed from the display, and will cause printer device gamut boundary 142 to be displayed, as shown in FIG. 6. Comparing monitor gamut boundary 140 (FIG. 5) with printer gamut boundary 142 shown in FIG. 6, it can be seen that the gamuts are not coextensive and that there is no one-to-one correspondence between colors in the monitor gamut and those in the printer gamut. Some of the colors in FIG. 6, for example, color squares 131a, 144, and 146, in the displayed palette are outside gamut boundary 142 of the selected printer device. From this display, the user knows that these colors will not be accurately reproduced on the selected printer. The user has manual control over mapping each color in the monitor's gamut to an appropriate color in the gamut of the target device by using the available color editing methods of GUI 10 to bring colors within the confines of target device gamut boundary 142. The user may also select and manually move color square 144 to a destination location 144a inside printer gamut boundary 142, along, for example, dotted line 145, where the resulting color is suitable for the user's purposes. Color 144a is now constrained within the physical limits of printer gamut boundary 142 and may not be moved beyond those boundaries.

The user also has manual control over the perceived lightness (or darkness) of a color. While the L* values are ignored for purposes of plotting the color palette in the a*, b* color space 130, the color's L* value is indirectly represented by the color shown in a color square, and correctly illustrates it's perceived lightness or darkness. The user may change the lightness signal of color 144a by selecting color 144a with right mouse button 38 to darken color 144a by a fixed increment, or with right mouse button 38 in conjunction with the SHIFT key on an input keyboard (not shown) to lighten color 144a by a fixed increment. A fixed increment of + 10 L* units is made to the L* value to lighten the color, to a maximum of 100, and a fixed decrement of -10 L* units is made to the L* value to darken the color, but other suitable increments may be used. The resulting changed color also undergoes a clipping process to ensure that it is a valid color in the displayed gamut solid.

All input palette colors and gamut measurements are referenced, or calibrated to a device independent color specification. Calibration establishes a correspondence between device coordinates and some universal metric such as CIE tristimulus values. The user must create a calibration model, for each monitor on which color editing GUI 10 is to be used, for transforming the device independent XYZ tristimulus values for an input color and for modified colors to device dependent signals for displaying colors on the user's monitor, and for transforming device dependent RGB signals to device independent XYZ tristimulus values. Steps for creating a calibration matrix are known in the art. The calibration takes into account the reference white of the user's monitor, the point where R = G = B = the maximum voltage. The inverse of the calibration matrix is applied to each palette color's tristimulus values to generate the RGB signals needed to display the color on the user's monitor.

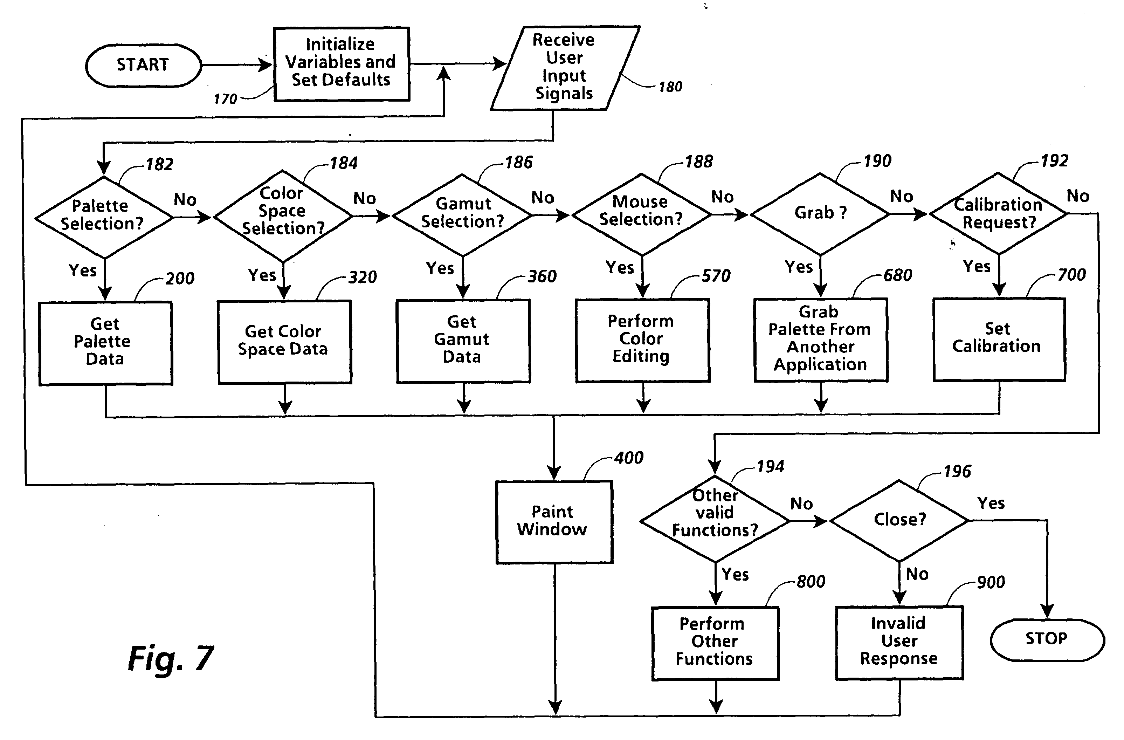

Figure 7 illustrates the overall process flow for displaying and editing data according to the features of the invention. The description which follows references a data structure called "StateRec" in which is stored the current processing data for implementing the color editing functions of color editing GUI 10. When color editing GUI 10 is invoked by the user, initialization procedures are performed in box 170, including several data retrieval and window processing routines. The initialization procedures define window functions, such as scrolling, painting the window, and saving the contents of the window, and menu entries in menu area 114, and associate each function and menu entry with the application procedure to be executed when the entry is selected by the user. An array data structure containing the data needed to physically graph the four color spaces available for display in color space window 112 is initialized with data for each color space. During the initialization process, and later when the user selects a color space for display, information for the selected color space is moved into fields in StateRec. Then, the initial data needed to process and display a default color space window 112 is collected in fields in the StateRec data structure The user's display device is established as the default monitor gamut to display in the color space. One of the CIE color spaces is established as the default color space to display, and appropriate color space drawing data is moved into the fields in StateRec. A palette of colors is also assigned as the default palette for the software to initially retrieve and store. These defaults may, of course, be changed to other selections or left for initial selection by the user. FIG 4 shows CIELAB color space 130 displayed as the default color space.

Monitor calibration data is computed for the user's monitor and stored in the StateRec data structure. The measured x, y chromaticities for the R, G, B primaries and for the monitor's reference white point, and the maximum luminance, Y, of the reference white, are read from a program-resident table for the selected monitor device, into the appropriate fields in StateRec. This measured data is used to create, by known methods, the monitor calibration transformation that will be used to perform color transformations needed to display input and modified color palette data on the user's monitor. The calibration matrix, the inverse of the matrix, and the monitor's white and black points, computed from measured data, are stored in StateRec. Initialization procedure 170 also includes initialization processing for color gamut boundary data for the monitor gamut. RGB triplet values for measured monitor primaries red, green, blue, cyan, magenta and yellow are each transformed into device independent XYZ tristimulus values to produce a set of XYZ values for each primary of the monitor gamut boundary, and stored in StateRec.

Processing steps are also executed during initialization for defining spectrum locus data. The program resident data values representing the chromaticities of the points of the spectrum locus, shown in the chromaticity diagram and UCS diagram color spaces, are read into the spectrum locus coordinates array. This initialization processing need occur only once during the user's color editing session. Gamut graphics data for plotting the trajectory of the monitor gamut in the default color space when requested by the user, are accumulated and stored in a field called "gamut" in StateRec. Graphics drawing instructions for plotting, in the default color space, the trajectory of the spectrum locus from the spectrum locus coordinates array are collected in the data structure "spectrumLocus" of StateRec for use by interaction handler 14 during the painting of color space window 112. The trajectory processing is repeated whenever the user selects a new color space requiring display of the spectrum locus. A default color palette is also retrieved during initilization processing and is stored in a palette array entry in StateRec. The processing details of these procedures are described below.

Finally, the physical location on display 100, the number of menu lines to display, and other characteristics of color space display window 112, needed by interaction handler 14 (FIG. 3), are established. Color space window 112 may be displayed during initialization processing, or it may be painted on display 100 when an appropriate user request signal is received. The initialization processes encompassed in box 170 of FIG. 7 are now completed, and processing transfers to box 182 in FIG. 7 for receipt of a user input signal.

User input signals are received in box 180 primarily from mouse mouse 32 (FIG. 2), when the cursor is positioned over menu entries on any of the menu lines of menu 114, or when the cursor is positioned over color space window 112. Boxes 182 through 196 analyze the received signals for subsequent processing. When the user requests the display of a color palette from menu 114 by selecting a palette name from the menu, the inquiry in box 182 is satisfied, and processing transfers to box 200, where the color palette data is retrieved from a data structure stored in memory 24 and prepared for subsequent display. Typically the color palette data is part of a data structure that has been created by another software application, such as an illustrator, painting, design, or graphics program. The color palette data may also be retrieved directly from a color map data structure. In a program-resident table, color editing GUI 10 associates each of the color palette names in a list of color palette names appearing on a second menu line with an actual data structure name for the data structure located in memory 24. When the user selects a list item, a table lookup is performed to find the actual input data structure name of the selected data structure and the name is made available to Procedure 200. Procedure 200 examines each data field in the externally stored palette data structure and extracts and builds an array of color palette information in StateRec. In particular, the input record is examined for the RGB triplet of phosphor gun voltage levels. Next, the RGB tristimulus values are converted to XYZ tristimulus values using the calibrated matrix transformation for the monitor calibration created during initialization processing. The resulting XYZ tristimulus values are used to compute the *x* and *y* chromaticity values and CIELAB L*,a*, b* values for the color. A common procedure, called Procedure 238, provides a conversion routine for converting a color's XYZ tristimulus values to a color specification in any selected color space. The procedure returns the color specification as vector coordinates for use by a graphics procedure to draw lines or curves to the point. These vector coordinates are also equivalent to the actual color specification in a selected color space. Procedure 238 returns the *x,y* chromaticities and CIELAB values to Procedure 200, which are then stored in StateRec. These values are computed once and stored for performance optimization. In an alternative implementation of Procedure 200, only the XYZ tristimulus values for each input palette color need be stored, and color values for different color spaces could be computed on an as-needed basis. After termination of the input data loop, the color palette constructed in StateRec is sorted to remove duplicate color entries, which are saved in an internal memory area, in order to ensure that they are updated with modified color values when the external data structure is updated during the processing of a "Save" request. Procedure 200 now returns processing control to the next executable procedure, as shown on the overall processing flowchart of FIG. 7.

When the user requests the display of a different color space in window 112 from menu 114, the inquiry in box 184 is satisfied, and control transfers to Procedure 320 for retrieving and formatting display and processing data for the selected color space. Procedure 320 analyzes the user's color space request for one of the valid color spaces listed in Table 1 above, and to determine if the selected color space is the same as the currently displayed color space. For a different color space, fields in StateRec are updated with necessary graphics information from the color space array structure built during initialization processing. A flag in StateRec used for determining subsequent processing in Paint Window procedure 400 is set equal to a value of "True" to indicate that a new color space has been selected.

Procedure 320 also computes the graphics drawing (trajectory) data needed to draw the spectrum locus trajectory and the gamut trajectory in the new current color space. Trajectory data consists of a series of coordinate points and instructions to draw lines from a prior position to the next coordinate position. Using the spectrum locus coordinate data structure initialized during initialization procedure 170, a loop is executed for computing a selected number of spectrum locus trajectory points for the array of spectrum locus coordinates, using Procedure 238 to compute the vector coordinates of each point in the proper color space format. The spectrum locus procedure is not executed if the newly selected color space is the CIELAB or the CIELAB histogram color space. Computing gamut trajectory data for the new current color space is performed in a similar manner and is described below. Processing control then returns and proceeds to box 400 to paint color space display window 112.

When the the user requests the display or removal of a monitor or printer gamut outline from menu 114, the inquiry in box 186 is satisfied, and processing transfers to Procedure 360 for retrieving and formatting display and processing data for the selected gamut, in box 360. Procedure 360 returns control to the next executable procedure in FIG. 7 if there has been no change in the gamut to be displayed gamut. Procedure 360 calls a procedure (Procedure 370) to get gamut coordinate data for the selected device for storage in StateRec. If the selected device gamut is for a monitor, the RGB triplet values for red, green, blue, cyan, magenta and yellow of the selected monitor are each transformed into XYZ tristimulus values using the monitor calibration matrix created during initialization to produce a set of XYZ values for each primary of the monitor gamut boundary. If the device is a printer, three sets of measured chromaticity data for each of six printer primary colors, stored in program-resident memory, are averaged, and the x, y chromaticity and Y value data is converted to XYZ tristimulus values for the measured printer primary colors.

Procedure 360 then calls Procedure 390 for computing the gamut graphics data needed for plotting the trajectory of the selected gamut in the currently displayed color space. Procedure 390 does not compute a gamut trajectory if the histogram color space is the color space currently selected for display. A data structure in StateRec contains fields for storing the trajectory path of the gamut, the actual color space coordinates for each vertex of the gamut, and the coordinates of the reference white of the measured gamut. Procedure 390 takes as input the value of the current color space and the gamut coordinates just computed in Procedure 370, and returns, in the StateRec field, "state.gamut", the graphics trajectory data needed to draw the gamut in the currently selected color space. Processing in Procedure 390, similar to that described above for computing the trajectory of the spectrum locus, executes a loop for computing the gamut trajectory points for the array of gamut coordinates, also using the common conversion procedure called Procedure 238 discussed earlier with reference to Procedure 200 to compute the color space coordinates from the XYZ tristimulus values for each set of gamut coordinates. For every coordinate set computed, a function for drawing a line to that point in the color space is executed and the result is put in the field in StateRec data structure. In addition, each set of gamut boundary coordinates and the color space coordinates for reference illuminant are also stored. Processing control then returns and proceeds to box 400 to paint color space display window 112.

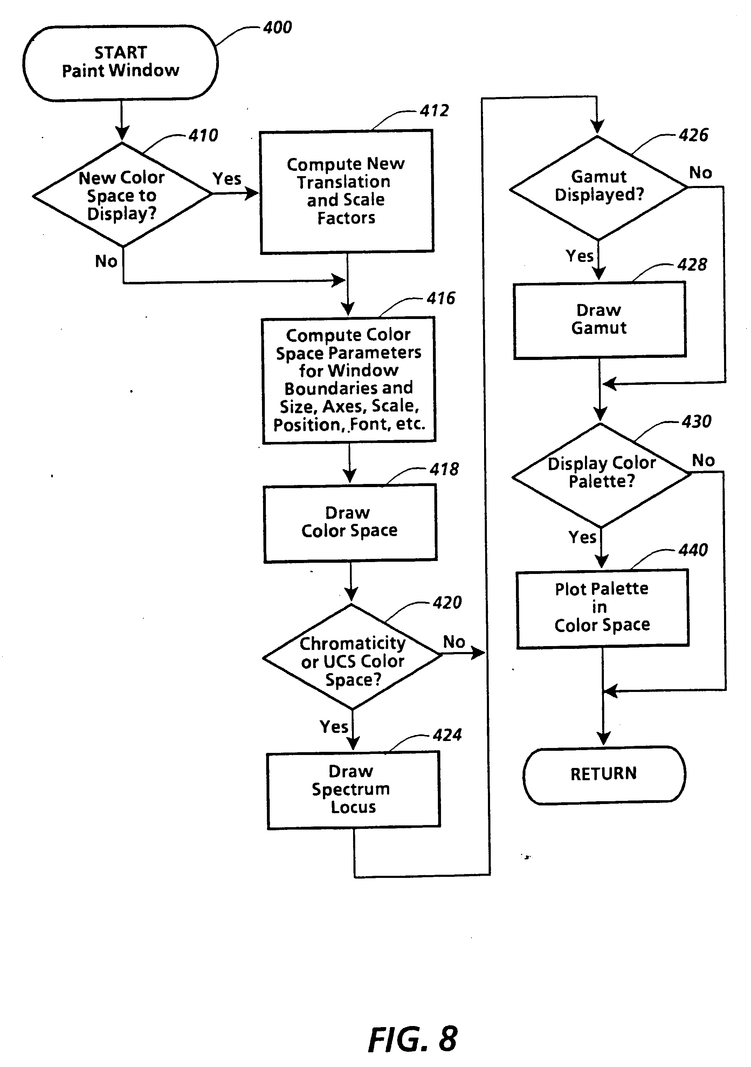

Several user input signals result in window 112 being "repainted" with new information. "Paint Window" process, in box 400, is commonly accessed by the functions requiring the currently displayed window to be repainted. The process flow for Paint Window procedure 400 is illustrated in FIG. 8. Paint window procedure 400 first tests, in box 410, a flag in StateRec to determine if a new color space has been selected for display since the last time color space window 112 has been painted. If not, control proceeds to box 416. If a new color space has been selected for display, control transfers to box 412 where translation and scale parameters in StateRec are updated from window boundary and size information about the current color space. The translation and scale parameters are used for tracking the current window size, the portion of the window displayed, and the size of the information displayed in the window, all of which are altered during execution of the window display functions for vertical and horizontal scrolling and enlarging or shrinking the window. In box 416, parameters used to draw the window boundaries, to size the window, and to draw and label the axes of the color space are computed or retrieved from StateRec, for formatting and executing instructions to draw the currently selected color space, in box 418, according to the descriptions of the color spaces previously provided. All drawing instructions must be in a format suitable for execution by I/O Interface 16 (FIG. 3) or optional graphics interface software 18 (FIG. 3), or otherwise must be in a format understandable to processor 22 (FIG. 1).

If the color space has a chromaticity diagram and requires display of the spectrum locus 102, procedure 400, in box 424, executes instructions for drawing spectrum locus 102 using graphics trajectory data in StateRec processed in procedure 330. If a gamut has been selected for display, Procedure 400, in box 428, executes suitably formatted instructions for drawing the selected gamut using the graphics trajectory data processed in procedure 390. Then, if there is a current color palette to display in color space display window 112, the current palette of colors is plotted and displayed in the current color space, in Procedure 440. Procedure 440 first determines whether the histogram is the current color space selected for display. If so, processing control transfers to another procedure for drawing the histogram. If the selected color space is one other than the histogram, processing continues with a loop which plots and displays each color in the color palette currently being edited by the user. Each color in the palette is plotted in a location in the color space determined by its color coordinates, which are always maintained as the current color coordinates for the color. When the user of color editing GUI 10 is using a color monitor, each color is displayed in the color space as a square mark in the color represented by the color information signals.

Processing for the plotting and display of a color in the color space includes clipping each palette color to the current color space, which produces a set of modified RGB tristimulus values if the color is clipped. Once the clipping procedures are completed, the electron gun voltages needed by display means 30 to display the color are computed from the RGB values for the clipped color, adjusted for the user's monitor if necessary, in a conventional manner. Next, the acutal physical coordinates needed to draw the color in the current color space are computed for use by the graphics interface software. The color values in CIE color spaces, converted from the color's device independent XYZ tristimulus values, also represent explicit positions when plotted in the respective color space by the graphics interface software, since the graphics interface software makes the conversion between the color space positions and positions needed on display screen 100. Instructions for locating and drawing the colored mark are formatted and executed. Loop processing continues until all palette colors in the palette have been plotted and displayed.

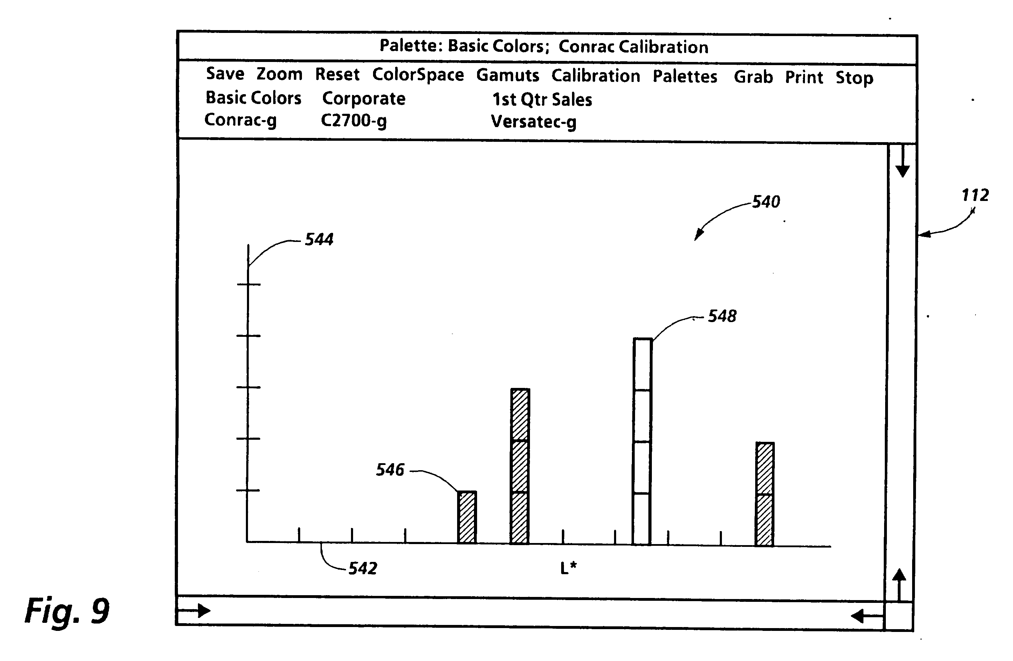

Paint Window Procedure 400 also constructs and displays the histogram color space, shown in FIG. 9. A histogram for an image or set of colors in a palette maps lightness to frequency of use. For reference, or pictorial, images, the histogram provides a profile for the image that defines whether it is high or low contrast, and provides information about tone reproduction and where in the lightness range the information lies. Tone (grayscale) reproduction affects the contrast and the overall brightness of the image. How well the gray tones in an original image ultimately map to the gray tones in the reproduction will determine if the information content of the image is proportionally preserved across the available gray levels of the gamut of the output color device. Because maintaining the contrast of an image across color reproduction devices is considered a very important factor in the reproduction process, the distribution of the lightness values can be informative. The way the lightness profile of an image is reproduced is very important to the quality of a reproduction. High overall contrast is often considered a mark of quality, and the user of color editing GUI 10 may find it appropriate to maximize contrast by adjusting the lightness distribution of the palette colors in some situations.

Histogram 540 consists of an L* versus frequency distribution graph of the colors in the palette of colors displayed in FIG. 6 above. The independent variable along x axis 542 represents the L* value for a color. The dependent value along the y-axis 544 is the number of colors in the palette at that L* value, each color being represented by a rectangular-shaped bar 546, displayed in the color the bar represents. For example, bar 548 represents four colors in the displayed input palette with an L* value between 70 and 80.

The detailed process flow for producing L* histogram color space 540 of FIG. 9 is straightforward. The interval of the L* groupings to be displayed on the histogram on the x-axis is computed first from the maximum number of L* values possible, divided by the number of L* groupings desired on the histogram. A fixed number of L* groups or classifications is established and may be controlled by a parameter initialized in memory, or left to user control. Next, the maximum bar height for any one bar to be displayed on the histogram is computed from information about the current size of the window displayed, so that only those colors in a particular distribution that will fit in the vertical window space will be displayed. The colors in the currently displayed palette are organized into sequence by L* value, in a procedure called Classify LStar, for display in histogram color space 540. Classify LStar procedure 500 first builds an easily accessed, temporary list data structure consisting of a fixed array of list records, one list record for each L* grouping to be displayed on the histogram, with each list record containing a field holding the number of colors in the palette in the respective L* grouping, followed by the required number of fields containing the indices of the color in the palette which fall into that L* grouping. In a loop, the palette colors, stored in ascending order by L* value are examined one by one, classified into the appropriate L* group by dividing the color's L* value by a computed group interval, and then incrementing the color count in the appropriate temporary record for that L* group.

Once organized for display, the histogram with the L* data is displayed, using a double loop control structure. The first, or outer, loop, controls the positioning and display along x-axis 542 of each successive L* grouping of colors. The second, or inner, loop, controls the process for building the vertical bar in the y-axis direction, showing the individual colors in the particular L* grouping. Each colored rectangular portion of the bar represents a different color in the palette in the same L* group as the other colors displayed as part of the bar, and each color is displayed on top of the previous color, up to the maximum permitted height of the bar. When the maximum bar height is reached before all colors in the L* group have been processed, the remaining colors in the group are not displayed, and processing continues with the next L* group. When all L* groups have been processed, control returns to Plot Palette procedure 440. When the Paint Window procedure 400 is completed, control returns to the next executable instruction in FIG. 7.

When the user clicks mouse 32 anywhere in color space window 112, either to select a color, to move a color, or to lighten or darken the color, the window manager's application interface 16 (FIG. 3) receives the mouse gesture, and a table correlates a mouse gesture with a request. The request is then passed to color editing GUI 10 for analysis and processing, and the inquiry in box 188 (FIG. 7) is satisfied. Processing transfers to Procedure 570 where the mouse screen position is examined to determine whether a color marker has been selected, and to determine which editing function has been selected, based on the sequence of mouse events received by the procedure. Valid gestures, or requests, are those listed in Table 2 below, which associates the available color function options with the buttons on mouse 32 and with the "SHIFT" key on an input keyboard device.

**Table 2:**

| Requesting Color Editing Functions | | |
|---|---|---|
| Mouse Button (FIG. 4C) | Keyboard "SHIFT" | Color Function Request and Comand(s) Generated |
| Left (34) | NO | Select & Query Color ("Query") |
| Middle (36) | NO | "Clip" Out-of-Gamut Color to Gamut Boundary ("From","To") |
| Middle (36) & Drag Color | NO | Edit Color to Value of New Location in Color Space ("From","To") |
| Right (38) | NO | Make Color Darker ("From","Darker") |
| Right (38) | YES | Make Color Lighter ("From","Lighter") |

Perform Color Editing procedure 570 is shown in detail in FIG. 10. Current x and y screen coordinate positions of the mouse pointer for the currently displayed color space are determined, taking into account the present window size and position. Next, in boxes 574, 576, and 580, tests are made to determine which request has been received. For all mouse gestures not corresponding to a valid request in Table 2, processing returns to the next executable procedure. When the user selects a color for any of the valid available color editing functions other than to display color information, the first request generated is a "From" command. The "From" command also satisfies the inquiry in box 574, and processing control then transfers to Procedure 590 which determines whether a valid color in the palette has been selected, and, if so, Procedure 590 determines which color in the palette has been selected. If a color has successfully been selected, a flag is set and control then passes to Paint Window procedure 400.

The user may edit the lightness signal of a palette color separately from hue and chroma information, to make the color lighter or darker. The users adjusts the lightness of a color when CIELAB color space 130 is displayed by requesting that a color be made lighter using right mouse button 38. When the user requests that a color be made lighter when CIELAB color space 130 is displayed, the L* value for the selected color is incremented by 10 L* units, to a maximum of 100 L* units. When the user requests that a color be made darker, the L* value for the selected color is decremented by 10 L* units, to a minimum of 5 L* units. Processing control transfers (via FIG. 7) to Paint Window procedure 400, where the color, with its changed lightness signal, together with the rest of the palette, will be displayed in color space window 112.

To change all coordinates of a palette color the user selects a color square with the cursor and middle mouse button 36, and, while keeping button 36 depressed, the user moves, or drags, the color square from its current location in color space 130 to a destination location which will represent the desired modified color in color space 130. The selection of a color square for editing first generates a "From" command to determine which color in the palette has been selected for editing, and then, when the user releases middle mouse button 36 at the desired destination location, a "To" command is generated from the user's mouse gesture, and processing control again enters procedure 570. The x and y screen position of destination location of the color is determined, in box 572. In box 600, a pre-clipping out-of-range test is done on the user-modified color values. The modified color values are retrieved from the screen coordinates, and the XYZ tristimulus values of the color are computed and evaluated to determine if the modified color edited by the user represent a physically possible color. If any of the X,Y, or Z values is negative, the color is not physically possible, and the user receives a message of the out-of-range color. If the color is in-range, the CIELAB values for the color are computed from the XYZ tristimulus values.

Upon completion of the range checking and computation of the modified color's CIELAB values, some gamut clipping processing is performed, depending on which function the user is performing. If the user is moving a color inside the monitor gamut only, Procedure 620 ensures that the modified color is reproducible in the monitor's gamut by using any conventional clipping procedure. Gamut clipping processing is carried out in CIELAB color space internally, using CIELAB cylindrical coordinates. First, a data structure is built which holds the data representing a device's color gamut. The gamut of a device is measured and stored in CIELAB coordinates. For each of a selection of L* values between 0 and 100, the outer edges of the device gamut are determined from a measured sampling of colors around the cylindrical perimeter of the selected L* level. A sample of forty measured colors around the perimeter of the a*, b* slice provides an approximation of the device gamut at the selected L* level sufficiently accurate to provide meaningful editing feedback to the user when editing colors within a gamut. In cylindrical CIELAB coordinates, such a sampling provides the maximum chroma value for a hue value every nine (9) degrees. A sampling of levels every 5 L* units results in measuring 19 levels of forty colors each. This measured device gamut data is stored in a two-dimensional 19 x 40 array structure, hereafter referred to as "Gamut".

Any known gamut clipping method may be performed. One such general chroma clipping algorithm preserves the achromatic component of the color as nearly as possible, and adjusts the chromatic component to bring the color to the edge of the gamut in such a way that hue constancy is nearly preserved. The modified color's chroma is brought to the maximum chroma reproducible in the monitor gamut for the modified hue and original lightness values. This clipping procedure includes converting the LAB coordinates to cylindrical hue and chroma coordinates. If the maximum chroma is greater than the modified color's chroma, the modified color's chroma is replaced by the maximum chroma, and the cylindrical coordinates of the color are converted back to LAB color space a*, b* coordinates. After clipping the color's chroma in CIELAB space, the modified color's XYZ tristimulus values are computed, and the modified and clipped color's XYZ tristimulus values are converted to RGB tristimulus values, and control returns to Procedure 570 for post-clipping processing in box 650.

Another known method compresses, rather than clips, all the colors such that the range of input colors just fits within the range of output colors. This compression can also be done selectively and non-linearly, such that for every quantized achromatic level and hue level, the chromatic component is compressed to fit within the output range possible for the chromatic and achromatic levels while preserving hue as nearly as possible. Similar compressions can be performed as a function of saturation, lightness, hue or any other color metric. A clipping method based on the lightness attribute ensures that the L* (lightness) level currently associated with the modified color is equal to or greater than the minimum lightness level and equal to or less than the maximum lightness level which will support the hue and chroma of the modified color in the selected target gamut. The chroma, in turn, is also iteratively evaluated at a constant hue during the processing for finding the optimum lightness level, so that the resulting clipped lightness level of the modified color supports the maximum or desired chroma for a fixed hue angle in CIELAB space.

If the user is modifying a color by constraining it inside the gamut of a selected output device gamut, additional processing is performed so that the modified color is the reproducible color in the target device gamut . The additional processing, Constraint processing, in box 615 of FIG. 10, will not permit the user to move a color already within the target device gamut to a destination location outside the target device gamut, and is executed every time the user moves a palette color while a printer gamut is displayed. Constraint and Intersect processing bring an irreproducible color to the edge of the gamut by determining the shortest vector distance from the color to the gamut. The Constraint procedure receives the gamut trajectory trajectory and boundary data described earlier. First, a line segment is created between the x and y coordinates of the modified color and the center, or white point, of the currently selected gamut. Then a loop is executed which tests whether the line segment intersects any of the line segments making up the boundaries of the gamut. The Intersect procedure uses known graphics techniques for testing for the intersection of the line segment and one gamut boundary side, and for finding the coordinates of the intersection point. If an intersection is found, the modified color is outside the gamut. The modified color's coordinates are then replaced with the intersection coordinates and returned from the Constraint procedure, effectively clipping the modified color to the edge of the gamut boundary along a straight line to the measured gamut's reference white point. If no intersection is found, the modified color's coordinates are returned from Constraint processing unchanged.

For colors constrained within a gamut, additional processing is needed to ensure that the clipped color is producible in the selected, measured device gamut. Any of the gamut clipping methods described above for monitor gamut clipping may also be performed here.

In post-clipping processing, the R, G, and B tristimulus values are each tested and adjusted, using a conventional clipping method for clipping the RGB values to the RGB color space, to make sure each value is between zero and one, prior to obtaining the physical (phosphor gun voltage) specifications for the color. If the RGB values have been clipped, color conversions from new XYZ tristimulus values must be performed again. The palette record entry for the current palette of colors is then updated with color values for the modified color. Control is then transferred to Paint Window procedure 400 (see FIG. 7), for displaying in color space window 112 the newly edited color, together with the rest of the currently selected palette.

Certain window display functions such as scrolling are provided for via mouse selection in color editing GUI 10, and Zoom, Save, Print, Reset, and Stop requests are provided in menu area 114. Requesting any of these other valid functions satisfies the inquiry in box 194 and initiates the appropriate processing in box 800. Invalid user requests are handled in a conventional error routine in box 900. Processing in color editing GUI 10 is terminated upon satisfying the user's request to terminate processing in box 196.

The graphical user interface and system of the present invention improve the user's ability to specify and control the colors in display and print images. Color editing GUI 10 takes advantage of the more predictable and easily perceived relationships among colors in the uniform CIELAB color space having enhanced visual uniformity. The display of an entire palette of colors during color editing enables the user to preserve color relationships among palette colors in order to preserve information or aesthetic content, as needed, in a display or print image. Manual placement of colors in the output hardcopy device gamut permits the user to directly control and predict color appearance in the output image. The color editing mechanism is based on simple physical movements in a two dimensional graphical frame of reference. Internal, device independent colorimetric representation and gamut clipping of colors provide a consistent and accurate color specification that preserves the intended color appearance of the color palette and minimizes color appearance differences when colors are produced on different color devices.

For a better understanding of the present invention, reference is made to U.S. application Serial No. 07/805,691, a copy of which was filed together with the present application.

## Claims

1. A graphical user interface (GUI) for modifying the appearance of a plurality of colors, said interface being for use in a system having memory means for storing color information signals representing the plurality of colors, and means for displaying the plurality of colors; said graphical user interface including,
means for receiving input signals from a user;
a color space display window;
color space drawing means for drawing a graphical representation of a color space in said color space display window and for drawing the plurality of colors in said color space, each color being drawn in a current location in said color space, said current location having coordinates defined by the color information signals representing each color; and
means for modifying one of the plurality of colors drawn in said color space in response to at least one signal received from said input signal receiving means,
wherein said modifying means includes moving means for moving the one color from said current location to a destination location in said color space, said destination location having coordinates defining a set of modified color information signals corresponding to a modified color, said color space drawing means drawing said modified color in the destination location in said color space.

2. The graphical user interface of claim 1,
further including a plurality of colorimetrically measured colors stored in the memory means and representing a gamut of reproducible colors of the display means; and
wherein said modifying means further includes means for adjusting said set of modified color information signals to produce a reproducible color in said display gamut.

3. A system for modifying a plurality of colors, each color being represented by a set of color information signals; said system comprising
display means for displaying the plurality of colors;
means for receiving input signals from a user;
color modifying processing means, coupled to said input signal receiving means and to said display means; and
memory means, in communication with said processing means, for storing therein the color information signals representing the plurality of colors;
said color modifying processing means including
color space drawing means for drawing on said display means a graphical representation of a color space, and for drawing the plurality of colors in said color space, each color being drawn in a current location in said color space, said current location having coordinates defined by the color information signals representing the respective color; and
means for modifying each of the plurality of colors drawn in said color space in response to said input signal receiving means, said modifying means including
means for moving one color of the plurality of colors from said current location to a destination location in said color space, said destination location having coordinates defining a set of modified color information signals corresponding to a modified color, said color space drawing means drawing said modified color in the destination location in said color space.

4. A graphical user interface according to claim 1, or the system of claim 3, for controlling and modifying the appearance of a plurality of colors for reproduction, further including:
a gamut of reproducible colors of a color reproduction device, said device gamut defined by a plurality of colorimetrically measured gamut colors, each color thereof being represented by a set of gamut color information signals that are stored in the memory means; and wherein
said color space drawing means is adapted for drawing a polygonal gamut boundary in said color space, said boundary having vertices at coordinates defined in said color space by the set of said gamut color information signals for respective ones of said plurality of colorimetrically measured gamut colors; and wherein
said modifying means is adapted for modifying one of the plurality of colors drawn in said color space in response to at least one of said input signals to produce signals representing a reproducible color in said colorimetrically measured device gamut; said modifying means further including
means for clipping said set of modified color information signals when the location of said modified color is inside said gamut boundary; and
means for constraining said modified color in said gamut boundary when the destination location of said modified color moved by said moving means is outside of said gamut boundary.

5. The graphical user interface of claim 4 further including gamut boundary selection means for selecting said polygonal gamut boundary for display in said color space from a plurality of colorimetrically measured device gamuts, in response to at least one of said input signals, said color space drawing means being responsive to said gamut boundary selection means for drawing said selected polygonal gamut boundary in said color space.

6. The system of claim 3 further comprising a plurality of colorimetrically measured colors representing the gamut of colors reproducible by said display means, and wherein said modifying means further includes means for adjusting said set of modified colorinformation signals representing said modified color in said color space to represent a reproducible color in said display gamut.

7. The GUI or system of any of the preceding claims wherein the set of color information signals for each color includes a lightness signal, and wherein said modifying means further includes lightness modifying means for modifying said lightness signal in response to at least one of said input signals to produce said set of modified color information signals.

8. The GUI or system of any of the preceding claims further including color space selection means for selecting said color space for display on said display window or display means from a plurality of color spaces in response to at least one of said input signals; said color space drawing means drawing said selected color space on said display means.

9. The GUI or system of any of the preceding claims wherein one of said plurality of color spaces is a lightness frequency distribution color space, and wherein said color space drawing means further includes means for drawing a graphical representation of the plurality of colors according to said lightness signal thereof in said lightness frequency distribution color space.

10. The GUI or system of any of the preceding claims wherein said color space is a uniform color space.

11. A method for modifying the appearance of a plurality of colors in a color display system having input signal receiving means for receiving signals from a user, a display device, and a memory for storing a set of color information signals corresponding to each color of the plurality of colors, the method comprising the steps of:
drawing on the display device a graphical representation of a color space;
plotting the plurality of colors in said color space, each color being plotted in a current location in said color space, said current location having coordinates defined by the set of color information signals of each color of the plurality of colors;
modifying any one of the plurality of colors in response to signals received from the input signal receiving means, said modifying step including the step of moving the one color from said current location to a destination location in said color space, said destination location having coordinates defining a set of modified color information signals representing a modified color in said color space; and
storing said set of modified color information signals in the color display system memory.

12. The method of claim 11 further including the steps of
colorimetrically measuring a plurality of colors representing the gamut of reproducible colors of the display device; and
storing said display gamut in the color display system memory;
and wherein said modifying step further includes adjusting said set of modified color information signals representing said modified color to represent a reproducible color in said display gamut.

13. A method for interactively controlling and modifying, in a color display system, the color reproduction of a plurality of colors; the color display system having input signal receiving means for receiving signals from a user, a display device, and a memory for storing a set of color information signals representing each color of the plurality of colors; the method comprising the steps of:
colorimetrically measuring a gamut of reproducible colors of a color reproduction device, each color thereof being represented by a set of gamut color information signals;
storing said colorimetrically measured device gamut in said memory;
drawing on said display device a graphical representation of a color space;
plotting the plurality of colors in said color space, each color being plotted in a current location in said color space, said current location having coordinates defined by the set of color information signals of each color of the plurality of colors, and plotting a polygonal gamut boundary in said color space, said boundary having vertices at coordinates defined in said color space by the set of said gamut color information signals for respective ones of said plurality of colorimetrically measured gamut colors;
modifying any one of the plurality of colors in response to signals received from the input signal receiving means to produce signals representing a reproducible color in said colorimetrically measured device gamut; and
storing said set of modified color information signals in said memory;
said modifying step including
moving the one color from said current location to a destination location in said color space, said destination location having coordinates defining a set of modified color information signals representing a modified color in said color space;
clipping said set of modified color information signals when said destination location of said modified color is inside said gamut boundary; and
constraining said modified color in said gamut boundary when said destination location of said modified color moved by said moving means is outside of said gamut boundary.

14. The method of any of claims 11 to 13 wherein the set of color information signals of each color includes a lightness signal, and wherein said modifying step further includes a lightness modifying step of modifying said lightness signal, in response to at least one of said input signals, to produce said set of modified color information signals.

15. The method of any of claims 11 to 15 wherein said color space is a uniform color space.

## Patentansprüche

1. Graphische Benutzerschnittstelle (GUI) zum Modifizieren des Erscheinungsbilds einer Vielzahl von Farben, wobei die Schnittstelle zur Verwendung in einem System dient, das Speichereinrichtungen zum Speichern von Farbinformationssignalen, die die Vielzahl der Farben darstellen, und Einrichtungen zum Anzeigen der Vielzahl der Farben besitzt, wobei die graphische Benutzerschnittstelle umfaßt,
Einrichtungen zum Empfangen von Eingangssignalen von einem Benutzer;
ein Farbraumanzeigefenster;
eine Farbraum-Zeichnungseinrichtung zum Zeichnen einer graphischen Darstellung eines Farbraums in dem Farbraumanzeigefenster und zum Zeichnen der Vielzahl der Farben in dem Farbraum, wobei jede Farbe in eine momentane Stelle in dem Farbraum gezeichnet wird, wobei die momentane Stelle Koordinaten besitzt, die durch die Farbinformationssignale definiert sind, die jede Farbe darstellen; und
eine Einrichtung zum Modifizieren einer der Vielzahl der Farben, die in dem Farbraum gezeichnet sind, in Abhängigkeit mindestens eines Signals, das von der Eingabesignal-Aufnahmeeinrichtung empfangen ist,
wobei die modifizierende Einrichtung eine Bewegungseinrichtung zum Bewegen der einen Farbe von der momentanen Stelle zu einer Bestimmungsstelle in dem Farbraum umfaßt, wobei die Bestimmungsstelle Koordinaten besitzt, die einen Satz modifizierter Farbinformationssignale entsprechend einer modifizierten Farbe definieren, wobei die Farbraum-Zeichnungseinrichtung die modifizierte Farbe in der Bestimmungsstelle in dem Farbraum zeichnet.

2. Graphische Benutzerschnittstelle nach Anspruch 1,
die weiterhin eine Vielzahl von kolorimetrisch gemessenen Farben besitzt, die in der Speichereinrichtung gespeichert sind und eine Tonskala reproduzierbarer Farben der Anzeigeeinrichtung darstellen;
wobei die modifizierende Einrichtung weiterhin eine Einrichtung zum Einstellen des Satzes der modifizierten Farbinformationssignale umfaßt, um eine reproduzierbare Farbe in der Anzeige-Tonskala zu produzieren.

3. System zum Modifizieren einer Vielzahl von Farben, wobei jede Farbe durch einen Satz von Farbinformationssignalen dargestellt wird, wobei das System aufweist
eine Anzeigeeinrichtung zum Anzeigen der Vielzahl der Farben;
eine Einrichtung zum Aufnehmen von Eingabesignalen von einem Benutzer;
eine Farbmodifizierverarbeitungseinrichtung, die mit der das Eingabesignal empfangenden Einrichtung und mit der Anzeigeeinrichtung gekoppelt ist; und
eine Speichereinrichtung in Verbindung mit der Verarbeitungseinrichtung, zum Speichern darin der Farbinformationssignale, die die Vielzahl der Farben darstellen;
wobei die Farbmodifizierverarbeitungseinrichtung umfaßt
eine Farbraum-Zeichnungseinrichtung zum Zeichnen auf der Anzeigeeinrichtung einer graphischen Darstellung eines Farbraums und zum Zeichnen der Vielzahl der Farben in dem Farbraum, wobei jede Farbe in eine momentane Stelle in dem Farbraum gezeichnet wird, wobei die momentane Stelle Koordinaten besitzt, die durch die Farbinformationssignale, die die jeweilige Farbe darstellen, definiert sind; und
eine Einrichtung zum Modifizieren jeder der Vielzahl der Farben, die in dem Farbraum gezeichnet sind, in Abhängigkeit von der Eingabesignal-Empfangseinrichtung, wobei die modifizierende Einrichtung umfaßt:
eine Einrichtung zum Bewegen einer Farbe der Vielzahl der Farben von der momentanen Stelle zu einer Bestimmungsstelle in dem Farbraum, wobei die Bestimmungsstelle Koordinaten besitzt, die einen Satz von modifizierten Farbinformationssignalen entsprechend einer modifizierten Farbe definieren, wobei die Farbraum-Zeichnungseinrichtung die modifizierte Farbe in der Bestimmungsstelle in dem Farbraum zeichnet.

4. Graphische Benutzerschnittstelle gemäß Anspruch 1, oder das System nach Anspruch 3, zum Steuern und Modifizieren des Erscheinungsbilds einer Vielzahl von Farben zur Reproduktion, die weiterhin umfaßt:
eine Tonskala reproduzierbarer Farben einer Farbreproduktionsvorrichtung, wobei die Vorrichtungs-Tonskala durch eine Vielzahl von kolorimetrisch gemessenen Tonskala-Farben definiert ist, wobei jede Farbe davon durch einen Satz von Tonskala-Farbinformationssignalen dargestellt wird, die in der Speichereinrichtung gespeichert sind; und wobei
die Farbraum-Zeichnungseinrichtung zum Zeichnen einer polygonalen Tonskala-Grenze in dem Farbraum geeignet ist, wobei die Grenze Scheitelpunkte an Koordinaten besitzt, die in dem Farbraum durch den Satz der Tonskala-Farbinformationssignale für jeweilige der Vielzahl der kolorimetrisch gemessenen Tonskala-Farben definiert sind; und wobei
die modifizierende Einrichtung zum Modifizieren einer der Vielzahl der Farben, die in dem Farbraum gezeichnet sind, in Abhängigkeit mindestens eines der Eingangssignale, um Signale zu produzieren, die eine reproduzierbare Farbe in der kolorimetrisch gemessenen Vorrichtungs-Farbskala darstellen, geeignet ist; wobei die modifizierende Einrichtung weiterhin umfaßt:
eine Einrichtung zum Beschneiden des Satzes modifizierter Farbinformationssignale, wenn die Stelle der modifizierten Farbe innerhalb der Tonskala-Grenze liegt; und
eine Einrichtung zum Einschränken der modifizierten Farbe in der Tonskala-Grenze, wenn die Bestimmungsstelle der modifizierten Farbe, die durch die Bewegungseinrichtung bewegt ist, außerhalb der Tonskala-Grenze liegt.

5. Graphische Benutzerschnittstelle nach Anspruch 4, die weiterhin eine Tonskala-Grenzen-Auswahleinrichtung zum Auswählen der polygonalen Tonskala-Grenze zur Anzeige in dem Farbraum einer Vielzahl kolorimetrisch gemessener Vorrichtungs-Tonskalen, in Abhängigkeit mindestens eines der Eingangssignale, umfaßt, wobei die Farbraum-Zeichnungseinrichtung auf die Tonskala-Grenzen-Auswahleinrichtung zum Zeichnen der ausgewählten polygonalen Tonskala-Grenze in dem Farbraum anspricht.

6. System nach Anspruch 3, das weiterhin eine Vielzahl von kolorimetrisch gemessenen Farben aufweist, die die Tonskala der Farben, die durch die Anzeigeeinrichtung reproduzierbar ist, darstellt, und wobei die modifizierende Einrichtung weiterhin eine Einrichtung zum Einstellen des Satzes modifizierter Farbinformationssignale umfaßt, die die modifizierte Farbe in dem Farbraum darstellen, um eine reproduzierbare Farbe in der Anzeige-Tonskala darzustellen.

7. Die GUI oder das System irgendeines der vorhergehenden Ansprüche, wobei der Satz Farbinformationssignale für jede Farbe ein Helligkeitssignal umfaßt, und wobei die modifizierende Einrichtung weiterhin eine Helligkeits-Modifiziereinrichtung zum Modifizieren des Helligkeitssignals in Abhängigkeit mindestens eines der Eingangssignale umfaßt, um den Satz modifizierter Farbinformationssignale zu produzieren.

8. Die GUI oder das System eines der vorhergehenden Ansprüche, das weiterhin eine Farbraum-Auswahleinrichtung zum Auswählen des Farbraums zur Anzeige auf dem Anzeigefenster oder der Anzeigeeinrichtung von einer Vielzahl von Farbräumen in Abhängigkeit mindestens eines der Eingangssignale umfaßt; wobei die Farbraum-Zeichnungseinrichtung den ausgewählten Farbraum auf der Anzeigeeinrichtung zeichnet.

9. Die GUI oder das System eines der vorhergehenden Ansprüche, wobei einer der Vielzahl der Farbräume ein Helligkeits-Frequenzverteilungs-Farbraum ist, und wobei die Farbraum-Zeichnungseinrichtung weiterhin eine Einrichtung zum Zeichnen einer graphischen Darstellung der Vielzahl der Farben entsprechend der Helligkeitssignale davon in dem Helligkeits-Frequenzverteilungs-Farbraum umfaßt.

10. Die GUI oder das System eines der vorhergehenden Ansprüche, wobei der Farbraum ein gleichförmiger Farbraum ist.

11. Verfahren zum Modifizieren des Erscheinungsbilds einer Vielzahl von Farben in einem Farbanzeigesystem, das eine Eingangssignal-Aufnahmeeinrichtung zum Aufnehmen von Signalen von einem Benutzer, eine Anzeigevorrichtung und einen Speicher zum Speichern eines Satzes von Farbinformationssignalen entsprechend jeder Farbe der Vielzahl der Farben besitzt, wobei das Verfahren die Schritte aufweist:
Zeichnen auf der Anzeigevorrichtung einer graphischen Darstellung eines Farbraums;
Ausdrucken der Vielzahl der Farben in dem Farbraum, wobei jede Farbe in einer momentanen Stelle in dem Farbraum gedruckt wird, wobei die momentane Stelle Koordinaten besitzt, die durch den Satz von Farbinformationssignalen jeder Farbe der Vielzahl der Farben definiert sind;
Modifizieren irgendeiner der Vielzahl der Farben in Abhängigkeit der Signale, die von der Eingabesignal-Aufnahmeeinrichtung empfangen sind, wobei der modifizierende Schritt den Schritt eines Bewegens der einen Farbe von der momentanen Stelle zu einer Bestimmungsstelle in dem Farbraum umfaßt, wobei die Bestimmungsstelle Koordinaten besitzt, die einen Satz modifizierter Farbinformationssignale definieren, die eine modifizierte Farbe in dem Farbraum darstellen; und
Speichern des Satzes der modifizierten Farbinformationssignale in dem Farbanzeigesystemspeicher.

12. Verfahren nach Anspruch 11, das weiterhin die Schritte umfaßt
kolorimetrisches Messen einer Vielzahl von Farben, die die Tonskala der reproduzierbaren Farben der Anzeigevorrichtung darstellen; und
Speichern der Anzeige-Tonskala in dem Farbanzeigesystemspeicher;
und wobei der modifizierende Schritt weiterhin ein Einstellen des Satzes der modifizierten Farbinformationssignale, die die modifizierte Farbe darstellen, umfaßt, um eine reproduzierbare Farbe in der Anzeige-Tonskala darzustellen.

13. Verfahren zum interaktiven Steuern und Modifizieren, in einem Farbanzeigesystem, der Farbreproduktion einer Vielzahl von Farben; wobei das Farbanzeigesystem eine Eingabesignal-Aufnahmeeinrichtung zum Aufnehmen von Signalen von einem Benutzer, eine Anzeigevorrichtung und einen Speicher zum Speichern eines Satzes von Farbinformationssignalen, die jede Farbe der Vielzahl der Farben darstellen, besitzt, wobei das Verfahren die Schritte aufweist:
kolorimetrisches Messen einer Tonskala reproduzierbarer Farben einer Farbreproduktionsvorrichtung, wobei jede Farbe davon durch einen Satz von Tonskala-Farbinformationssignalen dargestellt wird;
Speichern der kolorimetrisch gemessenen Vorrichtungs-Tonskala in dem Speicher;
Zeichnen auf der Anzeigevorrichtung einer graphischen Darstellung eines Farbraums;
Ausdrucken der Vielzahl der Farben in dem Farbraum, wobei jede Farbe in einer momentanen Stelle in dem Farbraum ausgedruckt wird, wobei die momentane Stelle Koordinaten besitzt, die durch den Satz von Farbinformationssignalen jeder Farbe der Vielzahl der Farben definiert sind, und Drucken einer polygonalen Tonskala-Grenze in dem Farbraum, wobei die Grenze Scheitelpunkte an Koordinaten besitzt, die in dem Farbraum durch den Satz der Tonskala-Farbinformationssignale für jeweilige der Vielzahl der kolorimetrisch gemessenen Tonskala-Farben definiert sind;
Modifizieren irgendeiner der Vielzahl der Farben in Abhängigkeit von Signalen, die von der Eingabesignal-Empfangseinrichtung empfangen sind, um Signale zu produzieren, die eine reproduzierbare Farbe in der kolorimetrisch gemessenen Vorrichtungs-Tonskala darstellen; und
Speichern des Satzes der modifizierten Farbinformationssignale in dem Speicher;
wobei der modifizierende Schritt umfaßt
Bewegen der einen Farbe von der momentanen Stelle zu einer Bestimmungsstelle in dem Farbraum, wobei die Bestimmungsstelle Koordinaten besitzt, die einen Satz modifizierter Farbinformationssignale definieren, die eine modifizierte Farbe in dem Farbraum darstellen;
Beschneiden des Satzes der modifizierten Farbinformationssignale, wenn die Bestimmungstelle der modifizierten Farbe innerhalb der Tonskala-Grenze liegt; und
Einschränken der modifizierten Farbe in der Tonskala-Grenze, wenn die Bestimmungsstelle der modifizierten Farbe, die durch die Bewegungseinrichtung bewegt ist, außerhalb der Tonskala-Grenze liegt.

14. Verfahren nach einem der Ansprüche 11 bis 13, wobei der Satz der Farbinformationssignale jeder Farbe ein Helligkeitssignal umfaßt, und wobei der modifizierende Schritt weiterhin einen Helligkeits-Modifierschritt eines modifizierenden Helligkeitssignals, in Abhängigkeit mindestens eines der Eingabesignale, umfaßt, um den Satz modifizierter Farbinformationssignale zu produzieren.

15. Verfahren nach einem der Ansprüche 11 bis 14, wobei der Farbraum ein gleichförmiger Farbraum ist.

## Revendications

1. Interface graphique d'utilisateur (GUI) destinée à modifier l'apparence d'une pluralité de couleurs, ladite interface étant destinée à être utilisée dans un système comportant un moyen de mémoire destiné à mémoriser des signaux d'informations de couleur représentant la pluralité de couleurs, et un moyen destiné à afficher la pluralité de couleurs, ladite interface graphique d'utilisateur comprenant,
un moyen destiné à recevoir des signaux de saisie provenant d'un utilisateur,
une fenêtre d'affichage d'espace de couleur,
un moyen de tracé d'espace de couleur destiné à tracer une représentation graphique d'un espace de couleur dans ladite fenêtre d'affichage d'espace de couleur et à tracer la pluralité de couleurs dans ledit espace de couleur, chaque couleur étant tracée à un emplacement en cours dans ledit espace de couleur, ledit emplacement en cours ayant des coordonnées définies par les signaux d'informations de couleur représentant chaque couleur, et
un moyen destiné à modifier l'une parmi la pluralité de couleurs tracées dans ledit espace de couleur en réponse à au moins un premier signal reçu depuis ledit moyen de réception de signaux de saisie,
dans lequel ledit moyen de modification comprend un moyen de déplacement destiné à déplacer la première couleur depuis ledit emplacement en cours vers un emplacement de destination dans ledit espace de couleur, ledit emplacement de destination ayant des coordonnées qui définissent un ensemble de signaux d'informations de couleur modifiés correspondant à une couleur modifiée, ledit moyen de tracé d'espace de couleur traçant ladite couleur modifiée à l'emplacement de destination dans ledit espace de couleur.

2. Interface graphique d'utilisateur selon la revendication 1,
comprenant en outre une pluralité de couleurs mesurées par colorimétrie, mémorisées dans le moyen de mémoire et représentant un espace de rendu des couleurs pour les couleurs qui peuvent être reproduites du moyen d'affichage, et
dans lequel ledit moyen de modification comprend en outre un moyen destiné à régler ledit ensemble de signaux d'informations de couleur modifiés afin de produire une couleur qui peut être reproduite dans ledit espace de rendu des couleurs de l'affichage.

3. Système destiné à modifier une pluralité de couleurs, chaque couleur étant représentée par un ensemble de signaux d'informations de couleur, ledit système comprenant
un moyen d'affichage destiné à afficher la pluralité de couleurs,
un moyen destiné à recevoir des signaux de saisie provenant d'un utilisateur,
un moyen de traitement de modification de couleur, couplé audit moyen de réception de signaux de saisie et audit moyen d'affichage, et
un moyen de mémoire, en communication avec ledit moyen de traitement, destiné à mémoriser dans celui-ci des signaux d'informations de couleur représentant la pluralité de couleur,
ledit moyen de traitement de modification de couleur comprenant
un moyen de tracé d'espace de couleur destiné à tracer sur ledit moyen d'affichage une représentation graphique d'un espace de couleur, et à tracer la pluralité de couleurs dans ledit espace de couleur, chaque couleur étant tracée à un emplacement en cours dans ledit espace de couleur, ledit emplacement en cours ayant des coordonnées définies par les signaux d'informations de couleur représentant la couleur respective, et
un moyen destiné à modifier chacune de la pluralité de couleurs tracées dans ledit espace de couleur en réponse audit moyen de réception de signaux de saisie, ledit moyen de modification comprenant
un moyen destiné à déplacer une première couleur parmi la pluralité de couleurs depuis ledit emplacement en cours vers un emplacement de destination dans ledit espace de couleur, ledit emplacement de destination ayant des coordonnées qui définissent un ensemble de signaux d'informations de couleur modifiés correspondant à une couleur modifiée, ledit moyen de tracé d'espace de couleur traçant ladite couleur modifiée à l'emplacement de destination dans ledit espace de couleur.

4. Interface graphique d'utilisateur selon la revendication 1, ou le système de la revendication 3, destinée à commander et à modifier l'apparence d'une pluralité de couleurs pour la reproduction, comprenant en outre :
un espace de rendu des couleurs pour les couleurs pouvant être reproduites d'un dispositif de reproduction de couleur, ledit espace de rendu des couleurs de dispositif étant défini par une pluralité de couleurs d'espace de rendu des couleurs mesurées par colorimétrie, chaque couleur de celui-ci étant représentée par un ensemble de signaux d'informations de couleur d'espace de rendu des couleurs qui sont mémorisés dans le moyen de mémoire, et dans lequel
ledit moyen de tracé d'espace de couleur est adapté pour tracer une limite polygonale d'espace de rendu des couleurs dans ledit espace de couleur, ladite limite comportant des sommets à des coordonnées définies dans ledit espace de couleur par l'ensemble desdits signaux d'informations de couleur de l'espace de rendu des couleurs pour des couleurs respectives parmi ladite pluralité de couleurs d'espace de rendu des couleurs mesurées par colorimétrie, et dans lequel
ledit moyen de modification est adapté pour modifier l'une parmi la pluralité des couleurs, tracée dans ledit espace de couleur en réponse à au moins l'un desdits signaux de saisie afin de produire des signaux représentant une couleur qui peut être reproduite dans ledit espace de rendu des couleurs de dispositif mesuré par colorimétrie, ledit moyen de modification comprenant en outre
un moyen destiné à limiter ledit ensemble de signaux d'informations de couleur modifiés lorsque l'emplacement de ladite couleur modifiée est à l'intérieur de ladite limite d'espace de rendu des couleurs, et
un moyen destiné à contraindre ladite couleur modifiée dans ladite limite d'espace de rendu des couleurs lorsque l'emplacement de destination de ladite couleur modifiée déplacée par ledit moyen de déplacement est à l'extérieur de ladite limite d'espace de rendu des couleurs.

5. Interface graphique d'utilisateur selon la revendication 4 comprenant en outre un moyen de sélection de limite d'espace de rendu des couleurs, destiné à sélectionner ladite limite d'espace de rendu des couleurs polygonale pour un affichage dans ledit espace de couleur à partir de plusieurs espaces de rendu des couleurs de dispositif mesurés par colorimétrie, en réponse à au moins l'un desdits signaux de saisie, ledit moyen de tracé d'espace de couleur répondant audit moyen de sélection de limite d'espace de rendu des couleurs afin de tracer ladite limite d'espace de rendu des couleurs polygonale sélectionnée dans ledit espace de couleur.

6. Système selon la revendication 3, comprenant en outre une pluralité de couleurs mesurées par colorimétrie représentant l'espace de rendu des couleurs qui peuvent être reproduites par ledit moyen d'affichage, et dans lequel ledit moyen de modification comprend en outre un moyen destiné à régler ledit ensemble de signaux d'informations de couleur modifiés représentant ladite couleur modifiée dans ledit espace de couleur afin de représenter une couleur qui peut être reproduite dans ledit espace de rendu des couleurs de l'affichage.

7. Interface graphique d'utilisateur ou système selon l'une quelconque des revendications précédentes, dans lequel l'ensemble des signaux d'informations de couleur pour chaque couleur, comprend un signal de luminosité, et dans lequel ledit moyen de modification comprend en outre un moyen de modification de luminosité destiné à modifier ledit signal de luminosité en réponse à au moins l'un desdits signaux de saisie afin de produire ledit ensemble de signaux d'informations de couleur modifiés.

8. Interface graphique d'utilisateur ou système selon l'une quelconque des revendications précédentes comprenant en outre, un moyen de sélection d'espace de couleur destiné à sélectionner ledit espace de couleur pour l'affichage sur ladite fenêtre d'affichage ou le moyen d'affichage à partir d'une pluralité d'espaces de couleur en réponse à au moins l'un desdits signaux de saisie, ledit moyen de tracé d'espace de couleur traçant ledit espace de couleur sélectionné sur ledit moyen d'affichage.

9. Interface graphique d'utilisateur ou système selon l'une quelconque des revendications précédentes, dans lequel l'un parmi ladite pluralité d'espaces de couleur est un espace de couleur à distribution en fréquences de luminosité, et dans lequel ledit moyen de tracé d'espace de couleur comprend en outre un moyen destiné à tracer une représentation graphique de la pluralité de couleurs conformément audit signal de luminosité de celui-ci dans ledit espace de couleur à distribution en fréquence de luminosité.

10. Interface graphique d'utilisateur ou système selon l'une quelconque des revendications précédentes, dans lequel ledit espace de couleur est un espace de couleur uniforme.

11. Procédé destiné à modifier l'apparence d'une pluralité de couleurs dans un système d'affichage de couleurs comportant un moyen de réception de signaux de saisie destiné à recevoir des signaux provenant d'un utilisateur, un dispositif d'affichage, et une mémoire destinée à mémoriser un ensemble de signaux d'informations de couleur correspondant à chaque couleur de la pluralité de couleurs, le procédé comprenant les étapes consistant à :
tracer sur le dispositif d'affichage une représentation graphique d'un espace de couleur,
positionner la pluralité de couleurs dans ledit espace de couleur, chaque couleur étant positionnée à un emplacement en cours dans ledit espace de couleur, ledit emplacement en cours ayant des coordonnées définies par l'ensemble de signaux d'informations de couleur de chaque couleur parmi la pluralité de couleurs,
modifier l'une quelconque parmi la pluralité de couleurs, en réponse aux signaux reçus depuis le moyen de réception de signaux de saisie, ladite étape de modification comprenant l'étape consistant à déplacer la première couleur depuis ledit emplacement en cours vers un emplacement de destination dans ledit espace de couleur, ledit emplacement de destination ayant des coordonnées définissant un ensemble de signaux d'informations de couleur modifiés représentant une couleur modifiée dans ledit espace de couleur, et
mémoriser ledit ensemble de signaux d'informations de couleur modifiés dans la mémoire du système d'affichage de couleur.

12. Procédé selon la revendication 11, comprenant en outre les étapes consistant à
mesurer par colorimétrie une pluralité de couleurs représentant l'espace de rendu des couleurs qui peuvent être reproduites par le dispositif d'affichage, et
mémoriser ledit espace de rendu des couleurs de l'affichage dans la mémoire du système d'affichage en couleur,
et dans lequel ladite étape de modification comprend en outre le réglage dudit ensemble de signaux d'informations de couleur modifiés représentant ladite couleur modifiée afin de représenter une couleur qui est reproductible dans ledit espace de rendu des couleurs de l'affichage.

13. Procédé destiné à commander et modifier de façon interactive, dans un système d'affichage en couleur, la reproduction en couleur d'une pluralité de couleurs, le système d'affichage en couleur comportant un moyen de réception de signal de saisie destiné à recevoir des signaux provenant d'un utilisateur, un dispositif d'affichage, et une mémoire destinée à mémoriser un ensemble de signaux d'informations de couleur représentant chaque couleur de la pluralité de couleurs, le procédé comprenant les étapes consistant à :
mesurer par colorimétrie un espace de rendu des couleurs reproductibles d'un dispositif de reproduction de couleur, chaque couleur de celui-ci étant représentée par un ensemble de signaux d'informations de couleur d'espace de rendu des couleurs,
mémoriser ledit espace de rendu des couleurs du dispositif mesuré par colorimétrie dans ladite mémoire,
tracer sur ledit dispositif d'affichage une représentation graphique d'un espace de couleur,
positionner la pluralité de couleurs dans ledit espace de couleur, chaque couleur étant positionnée à un emplacement en cours dans ledit espace de couleur, ledit emplacement en cours présentant des coordonnées définies par l'ensemble de signaux d'informations de couleur de chaque couleur parmi la pluralité de couleurs, et positionner une limite d'espace de rendu des couleurs polygonale dans ledit espace de couleur, ladite limite présentant des sommets à des coordonnées définies dans ledit espace de couleur par l'ensemble desdits signaux d'informations de couleur d'espace de rendu des couleurs pour des couleurs respectives parmi ladite pluralité de couleurs de l'espace de rendu des couleurs mesuré par colorimétrie,
modifier l'une quelconque de la pluralité de couleurs en réponse aux signaux reçus depuis le moyen de réception de signaux de saisie afin de produire des signaux représentant une couleur reproductible dans ledit espace de rendu des couleurs du dispositif mesuré par colorimétrie, et
mémoriser ledit ensemble de signaux d'informations de couleur modifiés dans ladite mémoire,
ladite étape de modification comprenant
le déplacement de la première couleur depuis ledit emplacement en cours vers un emplacement de destination dans ledit espace de couleur, ledit emplacement de destination ayant des coordonnées définissant un ensemble de signaux d'informations de couleur modifiés représentant une couleur modifiée dans ledit espace de couleur,
limiter ledit ensemble de signaux d'informations de couleur modifiés lorsque ledit emplacement de destination de ladite couleur modifiée est à l'intérieur de ladite limite d'espace de rendu des couleurs, et
contraindre ladite couleur modifiée dans ladite limite d'espace de rendu des couleurs lorsque ledit emplacement de destination de ladite couleur modifiée déplacée par ledit moyen de déplacement est à l'extérieur de ladite limite d'espace de rendu des couleurs.

14. Procédé selon l'une quelconque des revendications 11 à 13, dans lequel l'ensemble de signaux d'informations de couleur de chaque couleur comprend un signal de luminosité, et dans lequel ladite étape de modification comprend en outre une étape de modification de luminosité consistant à modifier ledit signal de luminosité, en réponse à au moins l'un desdits signaux de saisie, afin de produire ledit ensemble de signaux d'informations de couleur modifiés.

15. Procédé selon l'une quelconque des revendications 11 à 15, dans lequel ledit espace de couleur est un espace de couleur uniforme.
